# EUROPÄISCHE PATENTSCHRIFT

(11) **EP 2 294 176 B1**
(45) Veröffentlichungstag und Bekanntmachung des Hinweises auf die Patenterteilung: **07.03.2018**
(21) Anmeldenummer: 09761416.8
(22) Anmeldetag: 03.06.2009
(51) Int. Cl.: C12M 1/02

(54) **PROBENKAMMER-ADAPTER, INSBESONDERE FÜR DIE KRYOKONSERVIERUNG BIOLOGISCHER PROBEN**
SAMPLE CHAMBER ADAPTER, IN PARTICULAR FOR THE CRYOCONSERVATION OF BIOLOGICAL SAMPLES
ADAPTATEUR DE CHAMBRE D'ÉCHANTILLON, EN PARTICULIER POUR LA CRYOCONSERVATION D'ÉCHANTILLONS BIOLOGIQUES

(30) Priorität: 13.06.2008 DE 102008028334
(43) Veröffentlichungstag der Anmeldung: 16.03.2011
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko, 66386 St. Ingbert (DE); VON BRIESEN, Hagen, 65510 Hünstetten (DE); GERMANN, Anja, 66117 Saarbrücken (DE)
(74) Vertreter: Hertz, Oliver
(86) Internationale Anmeldenummer: PCT/EP2009/003973
(87) Internationale Veröffentlichungsnummer: WO 2009/149853

(56) Entgegenhaltungen:
- EP-A1- 1 382 394
- WO-A1-97/18896
- WO-A1-2007/085385
- DE-U1- 7 821 534
- US-A- 2 897 992

## Beschreibung

Die Erfindung betrifft eine Adaptereinrichtung, die zur Positionierung einer Probenkammer in einer Kühleinrichtung vorgesehen ist. Die Erfindung betrifft insbesondere eine Adaptereinrichtung, die für die Fixierung von Probenkammern verschiedener Form und/oder Größe in der Kühleinrichtung geeignet ist. Die Erfindung betrifft des Weiteren eine Probenaufnahmeeinrichtung, welche die Adaptereinrichtung und eine Probenkammer umfasst. Des Weiteren betrifft die Erfindung ein Verfahren zur Kryokonservierung einer biologischen Probe, bei dem eine Probenkammer mit der Probe unter Verwendung der Adaptereinrichtung in der Kühleinrichtung angeordnet wird. Bevorzugte Anwendungen der Erfindung bestehen bei der Kryokonservierung biologischer Proben.

Es ist allgemein bekannt, biologische Proben zur Lagerung (Speicherung) und/oder zur Bearbeitung in einen gefrorenen Zustand zu überführen (Kryokonservierung). Zur Kryokonservierung werden Probenträger verwendet, die zur Aufnahme einer Probe und zur Fixierung in einer Kühleinrichtung vorgesehen sind. Ein Probenträger enthält mindestens eine Probenkammer, deren Form und Größe insbesondere in Abhängigkeit von Eigenschaften der Probe gewählt werden. Probenkammern können zum Beispiel durch Kapillarröhrchen, Substratnäpfe oder offene Schalen gebildet werden. Typischerweise enthalten Probenträger des Weiteren einen elektronischen Datenspeicher zur Aufnahme von Probendaten, eine Schnittstelle zum Zugriff auf den Datenspeicher und eine Identifizierungseinrichtung für den Probenträger.

Aus der internationalen Patentanmeldung WO 97/18896 ist eine zur Tiefkühlung geeignete Halterung für Probenröhrchen aus einem elastischen Material bekannt. Die Halterung besteht aus einer sockelartigen Basis mit einer Probenidentifizierungseinheit und einem durchbrochenen, rohrförmigen Aufbau, in dem ein Probenröhrchen durch eine Klemmverbindung festgehalten werden kann. Aus der DE 78 21 534 U1 sind aus einer Kunststofffolie gefaltete Ständer für Reagenzröhrchen bekannt.

Für eine flexible Handhabung einer Vielzahl von Proben hat sich ein modular aufgebauter Probenträger als vorteilhaft erwiesen, der in WO 2007/085385 A1 beschrieben ist. Bei diesem Probenträger ist die Probenkammer in einem Hülsenteil angeordnet. Das Hülsenteil weist zueinander komplementäre Enden auf, so dass eine Vielzahl von Hülsenteilen zu einem gemeinsamen Probenträger zusammensteckbar sind. Die Hülsenteilenden sind auch für eine Verbindung mit einem Basis- oder Sockelteil vorgesehen, das in einer Kühleinrichtung fixierbar ist.

Der herkömmliche Probenträger wird zum Beispiel im Spritzgussverfahren aus Kunststoff hergestellt, wobei die Probenkammer einstückig mit dem Hülsenteil verbunden oder zum Beispiel als Kapillarröhrchen in das Hülsenteil einsteckbar ist. Die Steckverbindung des Kapillarröhrchens mit dem Hülsenteil hat eine beschränkte Zuverlässigkeit, was unter praktischen Anwendungsbedingungen nachteilig sein kann. Ferner besteht die Gefahr, dass Kapillarröhrchen bei einer unbeabsichtigten Trennung vom Hülsenteil vertauscht werden. Des Weiteren können sich mit der Anpassung des Hülsenteils an einen bestimmten Typ der Probenkammer Nachteile ergeben, wenn Proben zwischen verschiedenen Kryobanken verwendet werden sollen. Wenn eine Probe von einer ersten Kryobank, in der ein bestimmter Typ von Probenkammern verwendet wird, in eine andere Kryobank mit anderen Typen von Probenkammern übertragen werden soll, können Probleme hinsichtlich der Fixierung der Probenkammer und die Anpassung an die jeweilige Verarbeitung elektronischer Probendaten ergeben. Mit der zunehmenden Anwendung und Verbreitung von Kryobanken und der damit zunehmenden Verwendung verschiedener Typen (Größen, Formen) von Probenkammern wird dieses Problem in jüngster Zeit noch verstärkt. Weitere, jedoch nicht für eine Kryokonservierung vorgesehene, modulare Reagenz- oder Probenhalterungen sind aus der DE 37 35 708 C2 bekannt.

Die Aufgabe der Erfindung ist es, eine verbesserte Adaptereinrichtung zur Aufnahme einer Probenkammer, insbesondere für die Kryokonservierung einer biologischen Probe, bereitzustellen, mit der Nachteile und Beschränkungen im Stand der Technik überwunden werden. Die Adaptereinrichtung soll insbesondere eine Halterung einer Probenkammer mit erhöhter Zuverlässigkeit ermöglichen. Des Weiteren soll die Adaptereinrichtung insbesondere eine Integration von Probenkammern verschiedener Typen in bestehende Kühl- und Datenverarbeitungseinrichtungen ermöglichen. Die Aufgabe der Erfindung ist es ferner, eine verbesserte Probenaufnahmeeinrichtung unter Verwendung der Adaptereinrichtung bereitzustellen. Die Aufgabe der Erfindung ist es des Weiteren, ein verbessertes Verfahren zur Kryokonservierung einer biologischen Probe bereitzustellen, mit dem Nachteile herkömmlicher Kryokonservierungsverfahren überwunden werden und das insbesondere eine flexible Verwendung von Probenkammern in verschiedenen Kühleinrichtungen ermöglicht.

Diese Aufgaben werden mit einer Adaptereinrichtung, einer Probenaufnahmeeinrichtung bzw. einem Verfahren mit den Merkmalen der nebengeordneten Ansprüche gelöst. Vorteilhafte Ausführungsformen und Anwendungen der Erfindung ergeben sich aus den abhängigen Ansprüchen.

Gemäß einem ersten Gesichtspunkt wird die Aufgabe der Erfindung durch die allgemeine technische Lehre gelöst, eine Adaptereinrichtung bereitzustellen, die eine Aufnahme für eine Probenkammer und eine Kopplungseinrichtung aufweist, über welche die Adaptereinrichtung in einer Kühleinrichtung positionierbar ist. Die Adaptereinrichtung ist zwischen einem Haltezustand, in dem die Adaptereinrichtung eine Kryokonservierungstemperatur aufweist und in dem die Probenkammer mit der Adaptereinrichtung verbunden, insbesondere von der Aufnahme formschlüssig eingeschlossen oder eingespannt sein kann, und einem Freigabezustand verstellbar, in dem die Adaptereinrichtung eine Temperatur oberhalb der Kryokonservierungstemperatur aufweist und in dem die Probenkammer frei beweglich und in die Adaptereinrichtung einsetzbar oder von der Adaptereinrichtung trennbar ist. Der Haltezustand beschreibt das gleichzeitige Vorliegen eines Aufnahmezustandes und einer Kryokonservierungstemperatur. Der Aufnahmezustand beschreibt einen Zustand, bei dem die Probenkammer von der Adaptereinrichtung aufgenommen ist und zwischen ihnen eine Verbindung, beispielsweise durch zumindest teilweisen Formschluss und/oder mechanische Spannung besteht. Die Kryokonservierungstemperatur ist eine Temperatur, bei der eine Probe, insbesondere eine wässrige Lösung oder Suspension, in der Probenkammer im gefrorenen Zustand vorliegt. Die Kryokonservierungstemperatur liegt insbesondere unterhalb von - 10 °C, vorzugsweise unterhalb von - 40 °C, besonders bevorzugt unterhalb von - 130 °C. Die erhöhte Temperatur des Freigabezustands ist eine Temperatur, bei der das mindestens eine Aufnahmeelement der Adaptereinrichtung zerstörungsfrei deformierbar und/oder beweglich ist, z. B. oberhalb 0 °C oder Raumtemperatur (20 °C).

Vorteilhafterweise kann durch die Verstellung der Aufnahme der Adaptereinrichtung zwischen dem Haltezustand und dem Freigabezustand die Handhabung der Probenkammer vereinfacht und die Fixierung der Probenkammer an einem Sockelteil oder einer weiteren Aufnahme für eine weitere Probenkammer zuverlässig realisiert werden.

Die Aufnahme umfasst mindestens ein Aufnahmeelement, das im Haltezustand starr und unbeweglich ist, so dass die Probenkammer mit dem mindestens einen Aufnahmeelement fixiert ist, und das im Freigabezustand deformierbar und/oder beweglich ist, so dass die Probenkammer von der Adaptereinrichtung lösbar ist. Vorteilhafterweise wird dadurch ermöglicht, dass die Adaptereinrichtung mit einer aufgenommenen Probenkammer im Haltezustand, d. h. bei der Kryokonservierungstemperatur eine Einheit bildet. Bei der Kryokonservierungstemperatur kann die Probenkammer nicht von der Aufnahme getrennt werden, ohne diese zu beschädigen oder zu zerstören. Somit wird die Zuverlässigkeit und Sicherheit der Halterung der Probenkammer erhöht. Des Weiteren kann im Fall einer unerwünschten Manipulation oder Falschbehandlung (insbesondere Trennung der Probenkammer von der Aufnahme bei der Kryokonservierungstemperatur) eine Beschädigung oder Zerstörung der Aufnahme visuell erkannt werden.

Gemäß einem zweiten Gesichtspunkt wird die Aufgabe der Erfindung durch die allgemeine technische Lehre gelöst, eine Probenaufnahmeeinrichtung, insbesondere für die Kryokonservierung einer biologischen Probe bereitzustellen, die eine Probenkammer zur Aufnahme der Probe und ein Sockelteil zur Fixierung der Probenkammer in einer Kühleinrichtung aufweist, wobei die Probenkammer mittels der erfindungsgemäßen Adaptereinrichtung gemäß dem o. g. ersten Gesichtspunkt der Erfindung mit dem Sockelteil verbunden ist.

Die Probenaufnahmeeinrichtung bildet einen Probenträger, bei dem das Sockelteil an die Verbindungsbedingungen in einer bestimmten Kühleinrichtung angepasst ist, während an den Typ der Probenkammer keine besonderen Anforderungen gestellt werden. Die Probenaufnahmeeinrichtung kann insbesondere wie bei herkömmlichen Techniken Zusatzfunktionen hinsichtlich der Speicherung und Verarbeitung von Probendaten und der Identifizierung der Probe erfüllen. Vorteilhafterweise wird ermöglicht, dass das Sockelteil und/oder die Adaptereinrichtung die gewünschten Zusatzfunktionen erfüllt. Hierzu enthält das Sockelteil und/oder die Adaptereinrichtung gemäß einer bevorzugten Variante einen Speicherchip zur Aufnahme und/oder Verarbeitung von Probendaten, ein Transponderelement zur drahtlosen Kommunikation mit einer externen Datenverarbeitungseinrichtung, eine Datenschnittstelle zur leitungsgebundenen Kommunikation mit einer externen Datenverarbeitungseinrichtung und/oder ein Identifizierungsmittel, insbesondere ein optisches Identifizierungsmittel. Beispielsweise kann das Identifizierungsmittel, insbesondere das optische Identifizierungsmittel, an dem mindestens einen Aufnahmeelement der Adaptereinrichtung vorgesehen sein.

Wenn gemäß einer ersten Variante der Probenaufnahmeeinrichtung eine lösbare Verbindung der Kopplungseinrichtung mit dem Sockelteil vorgesehen ist, können sich Vorteile für einen modularen Aufbau der Probenaufnahmeeinrichtung und für eine Entnahme der Probenkammer unter Tieftemperaturbedingungen ergeben. Alternativ kann gemäß einer zweiten Variante eine feste Verbindung der Kopplungseinrichtung mit dem Sockelteil vorgesehen sein, so dass vorteilhafterweise eine unbeabsichtigte Trennung beider Teile vermieden wird.

Gemäß einem dritten Gesichtspunkt wird die Aufgabe der Erfindung durch die allgemeine technische Lehre gelöst, ein Verfahren zur Kryokonservierung einer biologischen Probe bereitzustellen, bei dem die Probe in einer Probenkammer angeordnet und die Probenkammer mit der Probe mittels der erfindungsgemäße Adaptereinrichtung gemäß dem obigen ersten Gesichtspunkt mit einem Sockelteil verbunden und das Sockelteil in einer Kühleinrichtung fixiert wird. Vorteilhafterweise kann die Probenkammer bei Raumtemperatur oder bei einer Kryokonservierungstemperatur an der Adaptereinrichtung aufgenommen werden.

Die Kopplungseinrichtung ist gemäß einer bevorzugten Ausführungsform der erfindungsgemäßen Adaptereinrichtung so gebildet, dass ausschließlich im Haltezustand der Adaptereinrichtung deren Verbindung mit dem Sockelteil ermöglicht wird. Die Kopplungseinrichtung setzt sich aus mehreren Teilen der Adaptereinrichtung zusammen. Nur im Haltezustand sind diese Teile so zusammengefügt, dass die Verbindungsfunktion der Kopplungseinrichtung erfüllt wird. Im Freigabezustand sind die betreffenden Teile der Adaptereinrichtung so voneinander getrennt, dass die Verbindung mit dem Sockelteil nicht hergestellt werden kann. Mit der erfindungsgemäßen Adaptereinrichtung wird die Sicherheit der Handhabung der Probenkammer erhöht, da diese nicht von der Adaptereinrichtung trennbar ist, solange die Kopplungseinrichtung mit dem Sockelteil verbunden ist.

Vorteilhafterweise bestehen verschiedene Möglichkeiten, eine Verbindung der Kopplungseinrichtung mit dem Sockelteil zu bilden. Gemäß einer ersten Variante kann eine Schraubverbindung vorgesehen sein. Vorteilhafterweise wird damit eine besonders sichere und stabile Verbindung erzielt. Gemäß einer zweiten Variante kann eine Rastverbindung vorgesehen sein, die Vorteile in Bezug auf eine schnelle Handhabung der Adaptereinrichtung mit der Probenkammer hat. Gemäß einer dritten Variante kann die Kopplunaseinrichtung für eine Steckverbindung mit dem Sockelteil konfiguriert sein. Die Steckverbindung hat vorteilhafterweise einen besonders einfachen Aufbau und ermöglicht eine leichte Anpassung der Adaptereinrichtung an verschieden aufgebaute Sockelteile. Die Steckverbindung kann im Unterschied zum herkömmlichen Einstecken von Kapillar-Probenkammern in Hülsenteile (siehe oben) mit einer straffen Passung und somit erhöhten Zuverlässigkeit gebildet sein, wobei die Probenkammer in der Adaptereinrichtung von der Steckverbindung unbeeinträchtigt bleibt.

Gemäß einer weiteren bevorzugten Ausführungsform der Erfindung umfasst die Adaptereinrichtung mehrere, relativ zueinander bewegliche Aufnahmeelemente, wie zum Beispiel Haltearme (Klemmelemente), zwischen denen die Probenkammer von mindestens zwei Seiten greifbar ist. Die Probenkammer kann zwischen den Haltearmen eingeschlossen werden, wobei mindestens Teile der Probenkammer, z. B. eines Deckel und/oder Teile eines Gefäßes formschlüssig oder unter mechanischer Spannung fixiert sind. Vorteilhafterweise ermöglichen die Haltearme eine sichere Aufnahme der üblicherweise verwendeten Probenkammern mit einer langgestreckten Rohr-, Schlauch- oder Küvettenform. Zur Aufnahme einer Probenkammer, die sich im Wesentlichen entlang einer vorbestimmten Längsrichtung (axiale Richtung) erstreckt, werden die Haltearme der Adaptereinrichtung sich in der Längsrichtung erstreckend von der Seite (radiale Richtung) an die Probenkammer angelegt.

Des Weiteren kann das mindestens eine Aufnahmeelement, insbesondere die Haltearme, der Adaptereinrichtung so gebildet sein, dass die Probenkammer im aufgenommenen Zustand nicht nur in radialer, sondern auch in axialer Richtung eingeschlossen ist. Für diese Ausführungsform der Erfindung sind die Haltearme vorteilhafterweise an ersten Enden über eine Platte (und/oder mindestens ein Gelenk) verbunden, während an den entgegengesetzten, zweiten Enden der Haltearme die Kopplungseinrichtung gebildet ist. Vorteilhafterweise wird in diesem Fall die Verstellung der Adaptereinrichtung zwischen dem Freigabezustand und dem Haltezustand realisiert, indem die Haltearme im Freigabezustand auseinandergeschwenkt sind, um Platz zur Aufnahme der Probenkammer zu schaffen. Zur Verstellung in den Haltezustand werden die Haltearme zusammengefügt, bis die zweiten Enden die Kopplungseinrichtung bilden. In diesem Zustand wird die Adaptereinrichtung mit der Probenkammer mit dem Sockelteil verbunden, um die erfindungsgemäße Probenaufnahmeeinrichtung zu bilden.

Gemäß der Erfindung ist das mindestens eine Aufnahmeelement aus einem Material gebildet, das eine Freigabe der Probenkammer aus der Aufnahme der Adaptereinrichtung, insbesondere eine flexible Deformation im gekühlten Zustand, d.h. bei der Temperatur der Kryokonservierung ausschließt. Hierzu wird vorzugsweise ein Kunststoffmaterial, z. B. Polypropylen, HDPE, TPX (Handelsbezeichnung) oder Macrolon (Handelsbezeichnung), verwendet, welches bei der Kryokonservierungstemperatur, z. B. - 40 °C bis - 196 °C stabil ist. Das Material der Aufnahmeelemente ist also vorzugsweise bei der Kryokonservierungstemperatur so steif, dass eine Deformation der Aufnahmeelemente ausgeschlossen ist und eine Fixierung der Probenkammer durch teilweisen Formschluss und/oder mechanische Spannung nicht gelöst werden kann, ohne die Aufnahmeelemente zu zerstören. Der Aufnahmezustand kann also vorzugsweise bei der Kryokonservierungstemperatur nicht gelöst werden.

Gemäß einer weiteren Ausführungsform der Erfindung kann vorgesehen sein, dass die Größe der Aufnahme für die Probenkammer veränderlich ist. Vorteilhafterweise sind dadurch Probenkammern verschiedener Typen (Größe und/oder Form) an der Adaptereinrichtung fixierbar. Besonders bevorzugt ist die Aufnahme so gebildet, dass die Probenkammer in der Aufnahme eingespannt werden kann. Die Erfinder haben festgestellt, dass das Einspannen der Probenkammer an der Adaptereinrichtung eine zuverlässige Fixierung der Probenkammer sowohl bei Raumtemperatur als auch bei verringerten Temperaturen, insbesondere bei der Temperatur der Kryokonservierung ermöglicht. Hierzu sind die Aufnahmeelemente, z.B. die Haltearme, welche die Aufnahme bilden, vorzugsweise aus einem im Freigabezustand, d.h. bei einer Temperatur des Freigabezustandes, wie z. B. bei Raumtemperatur, nachgiebigen, insbesondere elastisch deformierbaren Material hergestellt. Somit kann ein zumindest teilweiser Formschluss und/oder eine mechanische Spannung zwischen der Probenkammer und den Aufnahmeelementen gebildet werden, um einen Aufnahmezustand zu realisieren.

Gemäß der Erfindung ist das mindestens eine Aufnahmeelement aus einem Material gefertigt, welches bei einer Temperatur des Freigabezustandes flexibel, vorzugsweise elastisch deformierbar ist und bei der Kryokonservierungstemperatur eine Deformation ausschließt. Somit kann diese Ausführungsform der Adaptereinrichtung bei einer Freigabetemperatur zwischen dem Freigabezustand und dem Aufnahmezustand verstellt werden, während dies bei der Kryokonservierungstemperatur ausgeschlossen ist.

Gemäß einer weiteren Modifizierung der Erfindung kann die Aufnahme der Adaptereinrichtung so gebildet sein, dass mindestens ein Oberflächenbereich der in der Aufnahme angeordneten Probenkammer frei liegt. Beispielsweise können die Haltearme einen lateralen Abstand (senkrecht zur Längsrichtung der Haltearme) aufweisen, durch den die Probenkammer sichtbar ist. Alternativ oder zusätzlich kann die Aufnahme aus einem zumindest teilweise transparenten Material gebildet sein, durch das die Probenkammer sichtbar ist. Vorteilhafterweise wird damit eine Sichtkontrolle der Probenkammer und/oder eine optische Messung an der Probe in der Probenkammer ermöglicht.

Die Kopplungseinrichtung der erfindungsgemäßen Adaptereinrichtung ist allgemein dazu vorgesehen, die Aufnahme für die Probenkammer mit dem Sockelteil oder einer weiteren Aufnahme zu verbinden, die in einer Kühleinrichtung positionierbar sind. Gemäß einer Variante der Erfindung kann an dem Sockelteil mindestens eine weitere Aufnahme mit mindestens einem Aufnahmeelement vorgesehen sein. Vorteilhafterweise wird damit ein modularer Aufbau ermöglicht, bei dem an dem Sockelteil eine Vielzahl von Aufnahmen nebeneinander befestigbar sind. Alternativ können mehrere Aufnahmen mit mehreren Probenkammern stapelförmig übereinander an dem Sockelteil angebracht sein.

Die Erfindung besitzt die folgenden weiteren Vorteile. Die Adaptereinrichtung ist bei Kryokonservierungstemperaturen, insbesondere bis zu - 200 °C kryotauglich, d.h. für die sichere Aufnahme der Probenkammer funktionsfähig. Das Sockelteil der Probenaufnahmeeinrichtung ist geeignet, alle für eine zuverlässige Kryokonservierung erforderlichen Funktionen zu erfüllen. Das Sockelteil ermöglicht ein Aufstecken auf eine Leiterkarte (Schaltungsboard). Das Sockelteil kann ggf. weitere Speicher- oder Identifizierungselemente beinhalten, die bei herkömmlichen Probenträgern nicht vorgesehen sind. Die Adaptereinrichtung ermöglicht ein Anbringen und ein Entnehmen von Probenkammern bei allen Betriebstemperaturen einer Kühleinrichtung für die Kryokonservierung, insbesondere unterhalb von - 130 °C.

Vorteilhafterweise ist es nicht zwingend erforderlich, dass die Probenkammer zum Einsetzen in die Adaptereinrichtung, d. h. im Freigabezustand der Adaptereinrichtung eine erhöhte Temperatur, z. B. Raumtemperatur aufweist. Die Probenkammer mit der Kryokonservierungstemperatur, z. B. ≤ - 180 °C, kann in die Adaptereinrichtung mit einer erhöhten Temperatur eingesetzt werden, bei der das mindestens eine Aufnahmeelement deformierbar und/oder beweglich ist. Da die erfindungsgemäße Adaptereinrichtung eine geringere Wärmekapazität als die Probenkammer aufweist, tritt nur eine minimale, unkritische Temperaturerhöhung an der Probenkammer auf. Die Adaptereinrichtung ist daher so gestaltet, dass die Wärmekapazität (und/oder Masse) der Adaptereinrichtung vorzugsweise weniger als 30 %, besonders bevorzugt weniger als 10 %, z. B. 1 % bis 5 % der Wärmekapazität (und/oder Masse) der Probenkammer beträgt.

Herkömmliche Kunststoffsubstrate können zuverlässig mit der Adaptereinrichtung aufgenommen und in einer Kühleinrichtung fixiert werden, wobei eine Erkennbarkeit von Beschriftungen oder anderen Identifizierungsmitteln, z. B. Barcodes auf der Oberfläche der herkömmlichen Substrate ermöglicht wird. Mit der Kopplungseinrichtung wird sichergestellt, dass eine aufgenommene Probenkammer nicht vom Sockelteil abfallen kann. Von besonderem Vorteil ist, dass mit der Erfindung ein universelles Werkzeug geschaffen wird, dass die Anbringung der verschiedensten Probenkammern in verschieden konfigurierten Kühleinrichtungen verschiedener Kryobanken ermöglicht.

Des Weiteren ist die Adaptereinrichtung mit einer Form gebildet, die an die Außenform der Probenkammer angepasst ist. Die Außenmaße der Adaptereinrichtung mit der Probenkammer ist nahezu gleich den Außenmaßen der Probenkammer allein. Vorteilhafterweise ermöglicht dies eine platzsparende Lagerung von Proben in der Kühleinrichtung.

Weitere Einzelheiten und Vorteile der Erfindung werden im Folgenden unter Bezug auf die beigefügten Zeichnungen beschrieben. Es zeigen:
- Figur 1:: eine schematische Perspektivansicht einer ersten Ausführungsform der erfindungsgemäßen Adaptereinrichtung;
- Figur 2:: eine schematische Illustration einer erfindungsgemäßen Probenaufnahmeeinrichtung mit einer weitere Ausführungsform einer Adaptereinrichtung;
- Figur 3:: eine schematische Illustration einer erfindungsgemäßen Adaptereinrichtung gemäß Figur 1 mit einer eingespannten Probenkammer
- Figur 4:: eine schematische Illustration eines Stapels erfindungsgemäßer Adaptereinrichtungen gemäß Figur 2; und
- Figur 5:: eine schematische Querschnittsansicht einer Vielzahl erfindungsgemäßer Probenaufnahmeeinrichtungen in einer Kühleinrichtung.

Bevorzugte Ausführungsformen der Erfindung werden im Folgenden unter beispielhaftem Bezug auf Adaptereinrichtungen beschrieben, bei denen die Aufnahme für die Probenkammer durch mindestens zwei Aufnahmeelemente (Haltearme) begrenzt wird. Die Umsetzung der Erfindung ist nicht auf die illustrierten Varianten beschränkt, sondern entsprechend mit anderen Konfigurationen der Aufnahme, insbesondere mit einer veränderlichen Querschnittsdimension zur Anpassung an verschiedene Grö-ßen und/oder Formen der Probenkammer oder mit einer anderen Anzahl von Aufnahmeelementen, z. B. ein Aufnahmeelement oder mehr als zwei Aufnahmeelemente, möglich.

Bei der Erläuterung wird auf eine Adaptereinrichtung für eine lang gestreckte Probenkammer (z. B. Röhre, Kapillare, Reagenzglas, mit rundem oder eckigem Querschnitt) Bezug genommen. Die Probenkammer ist allgemein ein verschließbares Gefäß. Typischerweise ist die Adaptereinrichtung zur Aufnahme einer einzigen Probenkammer ausgelegt. Die Längsrichtung der Probenkammer und der Adaptereinrichtung wird als axiale Richtung bezeichnet, während die radiale Richtung und die azimuthale Richtung (Umfangsrichtung) entsprechend senkrecht zur bzw. um die Längsrichtung verlaufen. Die Adaptereinrichtung kann entsprechend für Probenkammern ohne eine bevorzugte Längsausdehnung, z. B. für kugelförmige oder würfelförmige Probenkammern konfiguriert sein, wobei in diesem Fall die Längsrichtung durch eine Bezugslinie gegeben ist, die senkrecht durch einen Deckel der Probenkammer verläuft.

Die erfindungsgemäße Probenaufnahmeeinrichtung bildet einen Probenträger, der bei der Kryokonservierung biologischer Proben angewendet wird. Einzelheiten der Kryokonservierung, wie zum Beispiel Einzelheiten der Probenpräparation, des Einfrierverfahrens und der Überwachung der Proben, können realisiert werden, wie dies an sich von herkömmlichen Verfahren zur Kryokonservierung bekannt ist.

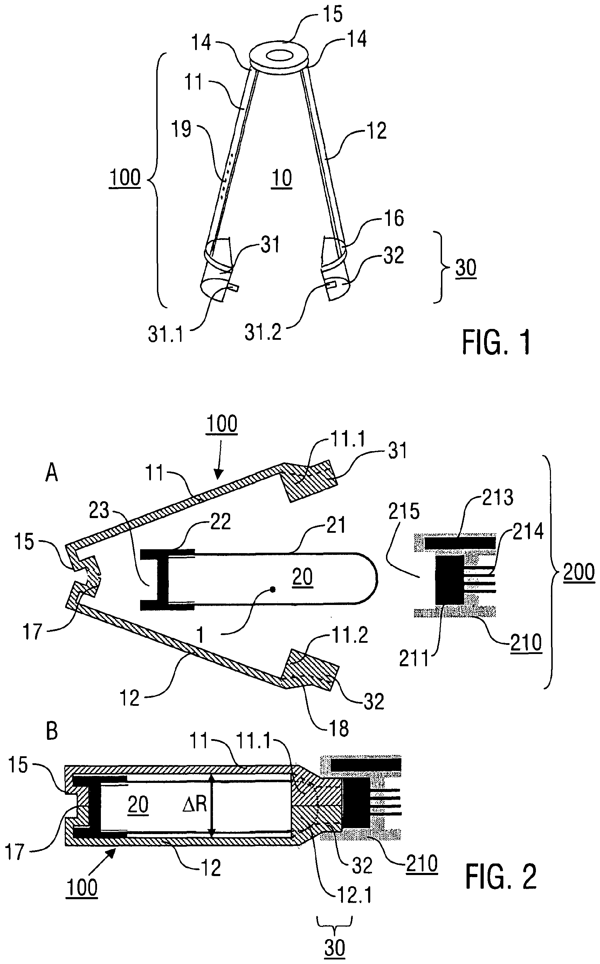

Bevorzugte Ausführungsformen der Adaptereinrichtung 100 und der Probenaufnahmeeinrichtung 200 gemäß der Erfindung sind in den Figuren 1 bis 4 illustriert. Gemäß Figur 1 umfasst die Adaptereinrichtung 100 als Aufnahmeelemente zwei Haltearme 11, 12, die an ihren ersten Enden 14 einander gegenüberstehend, verschwenkbar mit einer Platte 15 verbunden sind und an deren zweiten Enden 16 die Kopplungseinrichtung 30 vorgesehen ist. Die Haltearme 11, 12 haben die Form gerader Streifen mit einer ebenen oder azimuthal gekrümmten Oberfläche. In axialer Richtung ist eine Länge vorgesehen, die in Abhängigkeit von der Länge der Probenkammer, vorzugsweise im Bereich von 100 um bis 10 cm, insbesondere von 2 cm bis 5 cm gewählt ist. Die Breite der Haltearme 11, 12 ist so gewählt, dass ein sicherer Einschluss der Probekammer gewährleistet wird und die Probenkammer zwischen den Haltearmen 11, 12 sichtbar bleibt. Auf einem der Haltearme 11, 12 ist ein optisches Identifizierungsmittel 19, wie z. B. ein Barcode, vorgesehen.

Abweichend von der dargestellten Illustration mit zwei Haltearmen können mehr Haltearme, zum Beispiel drei, vier oder weitere Haltearme vorgesehen sein, die sich seitlich an die Probenkammer anlegen lassen. Mindestens zwei, einander gegenüberliegende Haltearme bilden an ihren freien Enden die Kopplungseinrichtung. Des Weiteren kann die Platte durch mindestens ein Gelenk ersetzt sein. Ferner kann ein einziges Aufnahmeelement (ein einziger Haltearm) vorgesehen sein, das an der Position der Platte 15 um die Probenkammer gebogen sein kann. In diesem Fall bilden die Enden des Aufnahmeelements die Kopplungseinrichtung. Ferner kann das Aufnahmeelement mindestens einen Ring umfassen, der die Probenkammer radial umgibt.

Wenn zwei Haltearme 11, 12 vorgesehen sind, können die Haltearme in azimuthaler Richtung konkav gekrümmte Streifen (schalenförmig gekrümmte Streifen) umfassen. Wenn drei oder mehr Haltearme vorgesehen sind oder wenn Hülsenabschnitte 11.1, 11.2 zur Halterung der Probenkammer vorgesehen sind (siehe Figur 2), können die Haltearme ebene Streifen umfassen.

Die Kopplungseinrichtung 30 umfasst zwei Zylinderabschnitte 31, 32, die im zusammengesetzten Zustand (wie in Figur 2B) ein zylinderförmiges Verbindungselement bilden. Die Zylinderabschnitte 31, 32 sind mit zueinander komplementären Vorsprüngen 31.1 und Ausnehmungen 32.1 ausgestattet, die ein Zusammenfügen (z. B. einrasten) der Zylinderabschnitte 31, 32 erleichtern. Wenn bei einer Variante der Erfindung drei oder mehr Haltearme vorgesehen sind, setzt sich die Kopplungseinrichtung 30 aus drei oder mehr Zylinderabschnitten zusammen.

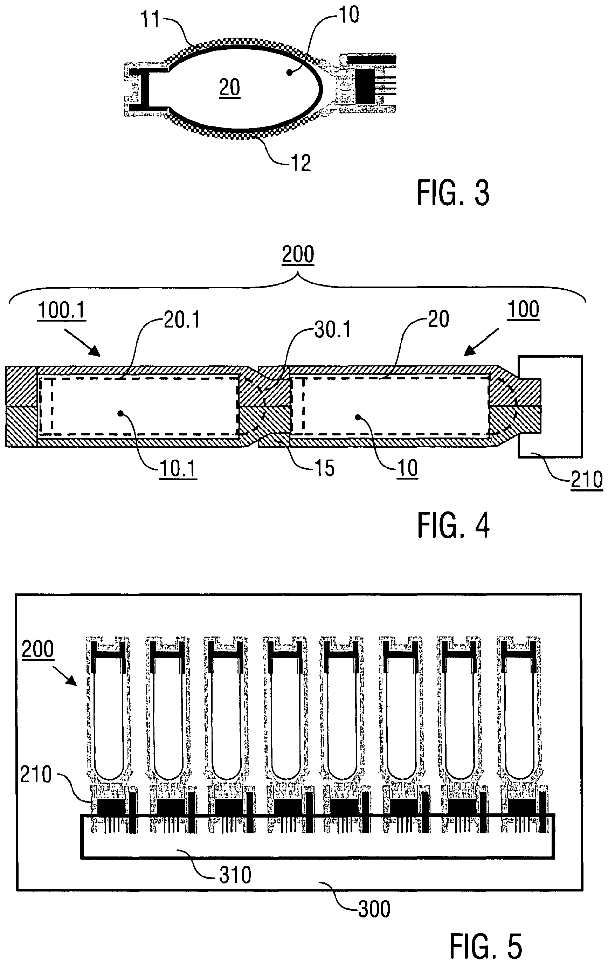

Die Adaptereinrichtung 100 ist einstückig aus einem Kunststoff, insbesondere einem transparenten Kunststoff, zum Beispiel TPX (Handelsbezeichnung) hergestellt. Vorzugsweise erfolgt die Herstellung im Spritzgussverfahren. Die Haltearme 11, 12 sind z. B. bei Raumtemperatur biegsam und an der Platte 15 relativ zueinander verschwenkbar. Im Freigabezustand der Adaptereinrichtung 100 (in Figur 1 dargestellt) sind die Haltearme 11, 12 auseinandergeschwenkt, um so ein Einsetzen der Probenkammer (nicht dargestellt) zu ermöglichen. Zur Überführung in den Haltezustand der Adaptereinrichtung 100 werden die Haltearme 11, 12 zusammengelegt, so dass die Zylinderabschnitte 31, 32 das zylinderförmige Verbindungselement bilden. In diesem Zustand wird die Probenkammer zwischen den Haltearmen 11, 12 der Adaptereinrichtung 100 formschlüssig eingeschlossen und fest mit einem Sockelteil verbunden, wie mit weiteren Einzelheiten in den Figuren 2 und 3 gezeigt ist. Im Haltezustand weist die Adaptereinrichtung 100 eine verringerte Temperatur auf, bei der das Material der Haltearme 11, 12 starr ist und die Haltearme 11, 12 nicht verschwenkbar sind.

Figur 2A zeigt die bevorzugte Ausführungsform der erfindungsgemäßen Probenaufnahmeeinrichtung 200 mit einer Adaptereinrichtung 100 im Freigabezustand. Die Adaptereinrichtung 100 umfasst, wie in Figur 1 gezeigt, zwei Haltearme 11, 12, die einerseits über die Platte 15 verbunden sind und andererseits Zylinderabschnitte 31, 32 zur Bildung der Kopplungseinrichtung 30 aufweisen. Die Zylinderabschnitte 31, 32 weisen abweichend von der Ausführungsform gemäß Figur 1 Hülsenabschnitte 11.1, 11.2 zur Halterung der Probenkammer auf. Die Hülsenabschnitte 11.1, 11.2 bilden im Haltezustand der Adaptereinrichtung 100 einen Hohlzylinder, in dem ein Ende der Probenkammer 20 aufgenommen ist (siehe Figur 2B)

Ein optional vorgesehenes Merkmal der erfindungsgemäßen Adaptereinrichtung 100 wird durch schräge Halteflächen 18 bereitgestellt, die in Figur 2A zwischen den Haltearmen 11, 12 und den Zylinderabschnitten 31, 32 gestrichelt illustriert sind. Die schrägen Halteflächen 18 sind vorteilhafterweise an den sich verjüngenden Boden der Probenkammer 20 angepasst. Durch die Halteflächen 18 wird die Fixierung der Probenkammer 20 in der Adaptereinrichtung 100 verbessert.

Das Sockelteil 210 umfasst einen Kunststoffkörper, in dem ein Speicherchip 211 mit einer Datenschnittstelle 214 und ein Transponderelement 213, z. B. ein RFID-Chip, eingebettet sind. Der Grundkörper des Sockelteils 210 weist eine Aufnahme 215 zur Bildung einer Steck-, Schraub- oder Rastverbindung mit der Kopplungseinrichtung 30 der Adaptereinrichtung 100 auf. Gemäß abgewandelten Varianten der Erfindung können der Speicherchip mit der Datenschnittstelle und/oder das Transponderelement an der Adaptereinrichtung 100 vorgesehen, z. B. durch Spritzguss mit einem der Haltearme 11, 12 oder der Platte 15 verbunden sein.

Die Probenkammer 20 umfasst zum Beispiel ein herkömmliches Kunststoffröhrchen 21 zur Aufnahme der Probe 1 mit einem Deckel 22. Es ist zum Beispiel ein Schraubdeckel mit einer Dichtung vorgesehen. Die Probenkammer 20 ist zur Aufnahme eines Probenvolumens im Bereich von 25 µl bis 1 l vorgesehen. Der Deckel 22 kann eine Vertiefung 23 aufweisen, in die im Haltezustand ein Vorsprung 17 der Platte 15 eingreift. Vorteilhafterweise wird dadurch die Fixierung der Probenkammer 20 in der Adaptereinrichtung 100 verbessert. Die Bereitstellung des komplementär zu der Vertiefung 23 gebildeten Vorsprungs 17 oder eine andere Anpassung der die Adaptereinrichtung an die Form der Probenkammer 20 stellt ein optionales, jedoch nicht zwingend vorgesehenes Merkmal dar.

Figur 2B illustriert den Haltezustand der erfindungsgemäßen Probenaufnahmeeinrichtung 200. Die Haltearme 11, 12 und die Hülsenabschnitte 11.1, 11.2 umgreifen die Probenkammer 20 in Längsrichtung. Die Zylinderabschnitte 31, 32 bilden die funktionsfähige Kopplungseinrichtung 30, zum Beispiel ein Verbindungselement mit einem Außengewinde. Die Kopplungseinrichtung 30 ist mit dem Sockelteil 210 fest verbunden.

Gemäß Figur 2B ist die Aufnahme 10 so gebildet, dass der Abstand ΔR zwischen den Haltearmen 11, 12 ohne die eingesetzte Probenkammer 20 gleich dem Durchmesser der Probenkammer 20 ist. In diesem Fall schließen die Haltearme 11, 12 die Probenkammer 20 formschlüssig ein. Der Abstand ΔR ist vorzugsweise kleiner als 10 cm, insbesondere kleiner als 2 cm, wie zum Beispiel 15 mm oder geringer.

Alternativ kann der Abstand zwischen den Haltearmen 11, 12 geringer als eine minimale Querschnittsdimension einer zu verwendenden Probenkammer 20 sein. Wenn die Haltearme 11, 12 aus einem elastisch deformierbaren, dehnbaren Material (z. B. Polyethylen, HDPE, Polypropylen) gebildet sind, kann die Probenkammer zwischen den Haltearmen 11, 12 eingespannt sein, wie schematisch in Figur 3 gezeigt ist. Vorteilhafterweise kann in diesem Fall die Adaptereinrichtung 100 für verschiedene Typen von Probenkammern verwendet werden.

Figur 4 illustriert eine Variante der erfindungsgemäßen Probenaufnahmeeinrichtung 200, bei der zwei Adaptereinrichtungen 100, 100.1 mit den Aufnahmen 10, 10.1 und jeweils einer Probenkammer 20, 20.1 stapelförmig an einem gemeinsamen Sockelteil 210 fixiert sind. Die Platte 15 der Aufnahme 10 ist zur Befestigung der Kopplungseinrichtung 30.1 der Aufnahme 10.1 angepasst. Beispielsweise ist die Platte 15 mit einem Innengewinde ausgestattet, in das die Kopplungseinrichtung 30.1 einschraubbar ist. Die in Figur 4 illustrierte Ausführungsform kann erweitert werden, indem an der Aufnahme 10.1 mindestens eine weitere Aufnahme befestigt wird.

Für die erfindungsgemäße Kryokonservierung einer biologischen Probe wird eine Probenkammer 20 mit der Probe 1 in die Aufnahme 10 der Adaptereinrichtung 100 eingesetzt und die Adaptereinrichtung 100 mit dem Sockelteil 210 verbunden. Zum Einsetzen kann die Probenkammer 20 eine gewünschte Kryokonservierungstemperatur oder Raumtemperatur aufweisen, während die Adaptereinrichtung 100 im Freigabezustand ist und eine erhöhte Temperatur aufweist. Das Sockelteil 210 wird in einer Kühleinrichtung fixiert (siehe Figur 5).

Figur 5 illustriert die Fixierung einer Vielzahl erfindungsgemäßer Probenaufnahmeeinrichtungen 200 auf einem gemeinsamen Träger 310 in einer Kühleinrichtung 300 (schematisch illustriert). Die Kühleinrichtung 300 umfasst zum Beispiel einen Tank, in dem eine Kühlung mit flüssigem Stickstoff oder mit Dampf des flüssigen Stickstoff vorgesehen ist, wie es für die Kryokonservierung biologischer Proben bekannt ist. Der Träger 310 umfasst zum Beispiel eine Leiterkarte, auf der die Sockelteile 210 der Probenaufnahmeeinrichtungen 200 eingesteckt sind, oder ein Regalgestell zur Aufnahme der Probenaufnahmeeinrichtungen.

Die in den Ansprüchen, der Beschreibung und den Zeichnungen offenbarten Merkmale der Erfindung können einzeln oder in Kombination für die Verwirklichung der Erfindung von Bedeutung sein.

## Patentansprüche

1. Adaptereinrichtung (100, 100.1), die umfasst:
- eine Aufnahme (10, 10.1), die zur lösbaren Fixierung einer Probenkammer (20, 20.1), insbesondere für die Kryokonservierung einer biologischen Probe (1), eingerichtet ist, und
- eine Kopplungseinrichtung (30, 30.1), die zur Verbindung der Aufnahme (10, 10.1) mit einem Sockelteil (210) eingerichtet ist, das in einer Kühleinrichtung (300) fixierbar ist,
**dadurch gekennzeichnet, dass**
- die Aufnahme (10, 10.1) mindestens ein Aufnahmeelement (11, 12) umfasst, das mit einem Material gebildet ist, das
- in einem Haltezustand bei einer Kryokonservierungstemperatur eine flexible Deformation ausschließt, so dass das mindestens eine Aufnahmeelement (11, 12) in dem Haltezustand bei der Kryokonservierungstemperatur unbeweglich ist und die Probenkammer (20, 20.1) fixiert, und das
- in einem Freigabezustand bei einer Temperatur oberhalb der Kryokonservierungstemperatur flexibel ist, so dass das mindestens eine Aufnahmeelement (11, 12) in dem Freigabezustand bei der Temperatur oberhalb der Kryokonservierungstemperatur deformierbar und/oder beweglich ist, so dass die Probenkammer (20, 20.1) von der Adaptereinrichtung (100, 100.1) lösbar oder in die Adaptereinrichtung (100, 100.1) einsetzbar ist.

2. Adaptereinrichtung gemäß Anspruch 1, bei der
- die Kopplungseinrichtung (30, 30.1) dazu eingerichtet ist, ausschließlich im Haltezustand der Aufnahme (10, 10.1) die Verbindung mit dem Sockelteil (210) zu bilden.

3. Adaptereinrichtung gemäß Anspruch 1 oder 2, bei der
- die Kopplungseinrichtung (30) für die Bildung einer Schraub-, Rast- oder Steckverbindung eingerichtet ist.

4. Adaptereinrichtung gemäß einem der vorhergehenden Ansprüche, bei der
- mehrere Aufnahmeelemente vorgesehen sind, die mindestens zwei Haltearme (11, 12) umfassen, zwischen denen die Probenkammer (20, 20.1) einschließbar ist.

5. Adaptereinrichtung gemäß Anspruch 4, bei der
- die Haltearme (11, 12) erste Enden (14), die über eine Platte (15) und/oder mindestens ein Gelenk verbunden sind, und zweite Enden (16) aufweisen, an denen die Kopplungseinrichtung (30) vorgesehen ist.

6. Adaptereinrichtung gemäß Anspruch 5, bei der die
- die Platte (15) und/oder das mindestens eine Gelenk bei der Kryokonservierungstemperatur starr ist.

7. Adaptereinrichtung gemäß einem der vorhergehenden Ansprüche, bei der die Aufnahme (10, 10.1)
- eine veränderliche Größe aufweist, so dass Probenkammern verschiedener Größen und/oder Formen an der Adaptereinrichtung fixierbar sind, und/oder
- so gebildet ist, dass die Probenkammer von dem mindestens einen Aufnahmeelement (11, 12) eingespannt werden kann.

8. Adaptereinrichtung gemäß einem der vorhergehenden Ansprüche, bei der
- die Aufnahme (10) zur Ankopplung mindestens einer weiteren Aufnahme (10.1) eingerichtet ist.

9. Adaptereinrichtung gemäß einem der vorhergehenden Ansprüche, bei der mehrere Aufnahmeelemente (11, 12) vorgesehen sind, die
- Hülsenabschnitte (11.1, 11.2) zur Halterung der Probenkammer (20, 20.1) umfassen, zwischen denen die Probenkammer (20, 20.1) einschließbar ist,
- einen lateralen Abstand aufweisen, so dass ein Oberflächenbereich der aufgenommenen Probenkammer (20, 20.1) frei liegt, und/oder
- zumindest teilweise transparent sind.

10. Adaptereinrichtung gemäß einem der vorhergehenden Ansprüche, bei der
- die Aufnahme (10) so gebildet ist, dass im Fall einer Trennung der Probenkammer (20) von der Aufnahme bei der Kryokonservierungstemperatur eine sichtbare Beschädigung oder Zerstörung aufweist.

11. Adaptereinrichtung gemäß einem der vorhergehenden Ansprüche, die enthält:
- einen Speicherchip,
- ein optisches Identifizierungsmittel (19),
- ein Transponderelement, und/oder
- eine Datenschnittstelle.

12. Probenaufnahmeeinrichtung (200), insbesondere für die Kryokonservierung einer biologischen Probe (1), die umfasst:
- mindestens eine Probenkammer (20, 20.1) zur Aufnahme der biologischen Probe, und
- ein Sockelteil (210) zur Fixierung der Probenkammer (20, 20.1) in einer Kühleinrichtung (300), wobei
- die mindestens eine Probenkammer (20, 20.1) mittels mindestens einer Adaptereinrichtung (100, 100') gemäß einem der vorhergehenden Ansprüche mit dem Sockelteil (210) verbunden ist.

13. Probenaufnahmeeinrichtung gemäß Anspruch 12, bei der
- die Kopplungseinrichtung (30) mit dem Sockelteil (210) fest verbunden ist.

14. Probenaufnahmeeinrichtung gemäß Anspruch 12 oder 13, bei der das Sockelteil (210) und/oder die Adaptereinrichtung (100, 100') enthält:
- einen Speicherchip (211),
- ein optisches Identifizierungsmittel (212, 19),
- ein Transponderelement (213), und/oder
- eine Datenschnittstelle (214).

15. Verfahren zur Kryokonservierung einer biologischen Probe (1), mit den Schritten:
- Aufnahme der biologischen Probe in einer Probenkammer (20, 20.1),
- Aufnahme der Probenkammer (20, 20.1) in einer Adaptereinrichtung (100, 100.1) gemäß einem der Ansprüche 1 bis 11,
- Verbindung der Adaptereinrichtung (100, 100.1) mit einem Sockelteil (210), und
- Fixierung des Sockelteils (210) in einer Kühleinrichtung (300).

## Claims

1. Adapter device (100, 100.1), comprising:
- a receptacle (10, 10.1), adapted for the detachable securing of a sample chamber (20, 20.1), in particular for the cryoconservation of a biological sample, and
- a coupling device (30, 30.1), adapted for connecting the receptacle (10, 10.1) to a base section (210) which can be secured in a cooling device (300),
**characterized in that**
- the receptacle (10, 10.1) has at least one receiving element (11, 12), which is made of a material, that
- in a holding state at a cryopreservation temperature excludes flexible deformation so that the at least one receiving element (11, 12) is immobile in the holding state at the cryopreservation temperature and secures the sample chamber (20,20,1), and that
- is flexible in a release state at a temperature above the cryopreservation temperature so that the at least one receiving element (11, 12) is deformable and/or movable in the release state at the temperature above the cryopreservation temperature, so that the sample chamber (20, 20.1) can be detached from the adapter device (100,100.1) or can be inserted into the adapter device (100,100.1).

2. Adapter device according to claim 1, wherein
- the coupling device (30, 30.1) is adapted to form the connection with the base section (210) exclusively in the holding state of the receptacle (10, 10.1).

3. Adapter device according to claim 1 or 2, wherein
- the coupling device (30) is designed to form a screw, snap-lock or plug-type connection.

4. Adapter device according to one of the preceding claims, wherein
- multiple receiving elements are provided, which comprise at least two retaining arms (11, 12), between which the sample chamber (20, 20.1) can be locked.

5. Adapter device according to claim 4, wherein
- the retaining arms (11, 12) have first ends (14), which are connected to each other by means of a plate (15) or at least one joint, and second ends (16) at which the coupling device (30) is provided.

6. Adapter device according to claim 5, wherein
- the plate (15) and/or the at least one joint is rigid at the cryoconservation temperature.

7. Adapter device according to one of the preceding claims, wherein the receptacle (10, 10.1)
- is of variable size so that sample chambers of different sizes and/or shapes can be secured to the adapter device, and/or
- is designed in such a way that the sample chamber can be clamped in by the at least one receiving element (11, 12).

8. Adapter device according to one of the preceding claims, wherein
- the receptacle (10) is designed for the attachment of at least one further receptacle (10.1).

9. Adapter device according to one of the preceding claims, wherein multiple receiving elements (11, 12) are provided, which
- have sleeve sections (11.1, 11.2) for holding the sample chamber (20, 20.1), between which the sample chamber (20, 20.1) can be enclosed,
- are a lateral distance from each other so that a surface area of the held sample chamber (20, 20.1) is exposed, and/or
- are at least partially transparent.

10. Adapter device according to one of the preceding claims, wherein
- the receptacle (10) is formed such that in the event of separation of the sample chamber (20) from the receptacle at the cryoconservation temperature it exhibits visible damage or destruction.

11. Adapter device according to one of the preceding claims, which contains:
- a memory chip,
- an optical identification means (19),
- a transponder element, and/or
- a data interface.

12. Sample holder device (200), in particular for the cryoconservation of a biological sample (1), comprising:
- at least one sample chamber (20, 20.1) for holding the biological sample, and
- a base section (210) for securing the sample chamber (20, 20.1) in a cooling device (300), wherein
- the at least one sample chamber (20, 20.1) is connected to the base section (210) by means of at least one adapter device (100, 100') according to one of the preceding claims.

13. Sample holder device according to claim 12, wherein
- the coupling device (30) is firmly connected to the base section (210).

14. Sample holder device according to claim 12 or 13, wherein the base section (210) and/or the adapter device (100, 100') contains:
- a memory chip(211),
- an optical identification means(212, 19),
- a transponder element (213), and/or
- a data interface (214).

15. Method of cryoconservation of a biological sample (1), comprising the steps:
- receiving the biological sample in a sample chamber (20, 20.1),
- positioning the sample chamber (20, 20.1) in an adapter device (100, 100.1) according to one of claims 1 to 11,
- connecting the adapter device (100, 100.1) with a base section (210), and
- securing the base section (210) in a cooling device (300).

## Revendications

1. Dispositif adaptateur (100, 100.1), qui comprend :
- un logement (10, 10.1), qui est mis au point aux fins de la fixation amovible d'une chambre d'échantillons (20, 20.1), en particulier pour la cryoconservation d'un échantillon (1) biologique, et
- un dispositif de couplage (30, 31.1) qui est mis au point aux fins de la liaison du logement (10, 10.1) à une partie de socle (210), qui peut être fixée dans un dispositif de refroidissement (300),
**caractérisé en ce que**
- le logement (10, 10.1) comprend au moins un élément de logement (11, 12), qui est formé avec un matériau, qui
- exclut toute déformation flexible dans un état de maintien à une température de cryoconservation de sorte que l'au moins un élément de logement (11, 12) est immobile dans l'état de maintien à la température de cryoconservation et fixe la chambre d'échantillons (20, 20. 1), et qui
- est flexible dans un état de libération à une température supérieure à la température de cryoconservation de sorte que l'au moins un élément de logement (11, 12) peut être déformé et/ou est mobile dans l'état de libération à la température supérieure à la température de conservation, de sorte que la chambre d'échantillons (20, 20.1) peut être détachée du dispositif adaptateur (100, 100.1) ou peut être insérée dans le dispositif adaptateur (100, 100.1).

2. Dispositif adaptateur selon la revendication 1, dans lequel
- le dispositif de couplage (30, 30.1) est mis au point afin de former exclusivement dans l'état de maintien du logement (10, 10.1) la liaison avec la partie de socle (210).

3. Dispositif adaptateur selon la revendication 1 ou 2, dans lequel
- le dispositif de couplage (30) est mis au point pour la formation d'une liaison par vissage, par enclenchement ou par emboîtement.

4. Dispositif adaptateur selon l'une quelconque des revendications précédentes, dans lequel
- plusieurs éléments de logement sont prévus, qui comprennent au moins deux bras de maintien (11, 12), entre lesquels la chambre d'échantillons (20, 20.1) peut être enfermée.

5. Dispositif adaptateur selon la revendication 4, dans lequel
- les bras de maintien (11, 12) présentent des premières extrémités (14), qui sont reliées par l'intermédiaire d'une plaque (15) et/ou d'au moins une articulation, et des secondes extrémités (16), au niveau desquelles le dispositif de couplage (30) est prévu.

6. Dispositif adaptateur selon la revendication 5, dans lequel
- la plaque (15) et/ou l'au moins une articulation sont rigides à la température de cryoconservation.

7. Dispositif adaptateur selon l'une quelconque des revendications précédentes, dans lequel le logement (10, 10.1)
- présente une taille variable de sorte que des chambres d'échantillons de tailles et/ou de formes différentes peuvent être fixées au niveau du dispositif adaptateur, et/ou
- est formé de telle manière que la chambre d'échantillons peut être enserrée par l'au moins un élément de logement (11, 12).

8. Dispositif adaptateur selon l'une quelconque des revendications précédentes, dans lequel
- le logement (10) est mis au point aux fins du couplage d'au moins un autre logement (10.1).

9. Dispositif adaptateur selon l'une quelconque des revendications précédentes, dans lequel sont prévus plusieurs éléments de logement (11, 12), qui
- comprennent des sections de manchon (11.1, 11.2) servant à maintenir la chambre d'échantillons (20, 20.1), entre lesquelles la chambre d'échantillons (20, 20.1) peut être renfermée ;
- présentent une distance latérale de sorte qu'une zone de surface de la chambre d'échantillons (20, 20.1) logé est dégagée, et/ou
- sont au moins en partie transparentes.

10. Dispositif adaptateur selon l'une quelconque des revendications précédentes, dans lequel
- le logement (10) est formé de telle sorte que dans le cas d'une séparation de la chambre d'échantillons (20) du logement, il présente à la température de cryoconservation un endommagement ou une destruction visible.

11. Dispositif adaptateur selon l'une quelconque des revendications précédentes, qui contient :
- une puce de mémorisation,
- un moyen d'identification (19) optique,
- un élément transpondeur, et/ou
- une interface de données.

12. Dispositif de logement d'échantillons (200), en particulier pour la cryoconservation d'un échantillon (1) biologique, qui comprend :
- au moins une chambre d'échantillons (20, 20.1) servant à loger l'échantillon biologique, et
- une partie de socle (210) servant à fixer la chambre d'échantillon (20, 20.1) dans un dispositif de refroidissement (300), dans lequel
- l'au moins une chambre d'échantillon (20, 20.1) est reliée à la partie de socle (210) au moyen d'au moins un dispositif adaptateur (100, 100') selon l'une quelconque des revendications précédentes.

13. Dispositif de logement d'échantillon selon la revendication 12, dans lequel
- le dispositif de couplage (30) est relié de manière solidaire la partie de socle (210).

14. Dispositif de logement d'échantillons selon la revendication 12 ou 13, dans lequel la partie de socle (210) et/ou le dispositif adaptateur (100, 100') contiennent :
- une puce de mémoire (211),
- un moyen d'identification (212, 19) optique,
- un élément transpondeur (213), et/ou
- une interface de données (214).

15. Procédé servant à la cryoconservation d'un échantillon (1) biologique, comprenant les étapes suivantes :
- le logement de l'échantillon biologique dans une chambre d'échantillon (20, 20.1),
- le logement de la chambre d'échantillons (20, 20.1) dans un dispositif adaptateur (100, 100.1) selon l'une quelconque des revendications 1 à 11,
- la liaison du dispositif adaptateur (100, 100.1) à une partie de socle (210), et
- la fixation de la partie de socle (210) dans un dispositif de refroidissement (300).
